# EUROPÄISCHE PATENTSCHRIFT

(11) **EP 0 603 259 B1**
(45) Veröffentlichungstag und Bekanntmachung des Hinweises auf die Patenterteilung: **30.10.1996**
(21) Anmeldenummer: 92919171.6
(22) Anmeldetag: 05.09.1992
(51) Int. Cl.: C04B 35/56, C04B 35/65, B01D 39/20

(54) **VERFAHREN ZUR HERSTELLUNG PORÖSER, DURCHSTRÖMBARER FORMKÖRPER AUS SILICIUMCARBID**
PROCESS FOR PRODUCING POROUS, THROUGH-FLOWABLE MOULDINGS MADE OF SILICIUM CARBIDE
PROCEDE DE FABRICATION DE CORPS MOULES POREUX EN CARBURE DE SILICIUM LAISSANT PASSER UN COURANT DE FLUIDE

(30) Priorität: 14.09.1991 DE 4130630
(43) Veröffentlichungstag der Anmeldung: 29.06.1994
(73) Patentinhaber: FORSCHUNGSZENTRUM JÜLICH GMBH, 52425 Jülich (DE)
(72) Erfinder: DIAS, Francisco, J., D-5170 Jülich (DE); KOCH, Freimut, J., D-5144 Erkelenz (DE)
(86) Internationale Anmeldenummer: DE9200753
(87) Internationale Veröffentlichungsnummer: WO9306059

(56) Entgegenhaltungen:
- DE-A- 1 914 232
- DE-A- 2 710 628
- DE-A- 3 305 529
- Dialog Information Services, File 351, World Patent Index 81-92, Dialog accession No. 003210527, WPI accession No. 81-71082D/39, Titanium Res Des: "Silicon carbide heating element prodn. involves siliconising baking in nitrogen at 1900-2500 degrees C", SU 784027, A, 801210, 8139 (Basic)
- Dialog Information Services, File 351, World Patent Index 81-92, Dialog accession No. 003753253, WPI accession No. 83-749462/35, NGK Spark Plug KK: "Silicon carbide filter prodn. useful for removing minute carbon particles from internal combustion engine waste gas", JP 58122016, A, 830720, 8335 (Basic)

## Beschreibung

Die Erfindung bezieht sich auf ein Verfahren zur Herstellung poröser, durchströmbarer Formkörper aus Siliciumcarbid gemäß den im Oberbegriff von Anspruch 1 aufgeführten Verfahrensschritten.

Keramische Filtermedien aus Siliciumcarbid und Verfahren zu deren Herstellung sind bekannt, beispielsweise aus der deutschen Patentschrift 33 05 529. Derartige Filterkörper können aufgrund ihrer chemischen Stabilität und ihrer Temperatur- und Temperaturwechselbeständigkeit beispielsweise als Heißgasfilter, Durchströmungselektrode oder auch als Katalysatorträger eingesetzt werden. Für diese wie auch für weitere Anwendungsfälle wäre es aber auch vorteilhaft, wenn solche durchströmbaren Siliciumcarbidkörper bei geringer Spannung, insbesondere unter 50 V, elektrisch aufheizbar und damit sowohl als Filter als auch gleichzeitig als Heizelement verwendbar wären. Dafür hat aber z.B. der in der deutschen Patentschrift 33 05 529 beschriebene Siliciumcarbidkörper mit 20 k Ω cm einen zu hohen elektrischen Widerstand, um als Heizelement eingesetzt zu werden. Es ist zwar auch bekannt, daß die elektrische Leitfähigkeit von Siliciumcarbid durch geeignete Dotierung mit Aluminium, Bor, Stickstoff u.a. in einem großen Bereich variiert werden kann. So können Siliciumcarbid-Bauteile mit Stickstoff dotiert werden, indem diese in Stickstoff-Atmosphäre bei 1900°C mehrere Stunden geglüht werden. Doch handelt es sich dabei zum einen um einen äußerst langsamen Vorgang und zum anderen ist der elektrische Widerstand derart dotierter Siliciumcarbidkörper immer noch zu hoch, um als Heizelemente im Niedervoltbereich verwendet werden zu können.

Es ist daher Aufgabe der Erfindung, ein Verfahren der eingangs genannten Art zu schaffen, das es erlaubt, poröse durchströmbare Formkörper aus Siliciumcarabid herzustellen, die aufgrund eines geringen elektrischen Widerstandes elektrisch aufheizbar und somit auch als Heizelemente einsetzbar sind.

Die der Erfindung zugrundeliegende Aufgabe wird dadurch gelöst, daß der Formkörper mit der nach dem Verkokungsprozeß folgenden Temperierung auf 1400 - 2000°C und dem damit erfolgenden Sili-cierungsschritt unter Bildung des β-Siliciumcarbids gleichzeitig mit Stickstoff dotiert wird. Das Wesen der Erfindung besteht also darin, daß die Dotierung nicht an dem fertig silicierten Körper, sondern bereits am verkokten Material während des Silicierungsschrittes durchgeführt wird. Aufgrund dieses erfindungsgemäßen Verfahrens wird zum einen der elektrische Widerstand des Endkörpers trotz der hohen Porosität drastisch herabgesetzt und zum anderen erfolgt die Dotierung in kürzerer Zeit, als wenn sie am fertig silicierten Körper durchgeführt wird.

Die mit der Silicierung gleichzeitig erfolgende Dotierung kann dadurch erfolgen, daß Stickstoff in Form einer geeigneten Verbindung, z.B. als Siliciumnitrit, dem Mischpulver zugegeben wird oder indem das verkokte Material mit einer stickstoffhaltigen Substanz, wie z.B. Aluminiumnitrit, imprägniert wird. Beide erfindungsgemäße Verfahrensweisen haben zur Folge, daß während der Temperierung des Formkörpers auf 1400 -2000°C der Formkörper durch den - bei dieser Temperatur aus den Verbindungen frei werdenden - Stickstoff und daneben ggf. auch durch Aluminium dotiert wird. Eine weitere Möglichkeit der Dotierung bei gleichzeitiger Silicierung besteht darin, den Formkörper auf eine Temperatur von 1400 - 2000°C unter Stickstoff- oder stickstoffhaltiger Atmosphäre aufzuheizen.

Um eine gleichmäßige elektrische Aufheizbarkeit des Formkörpers zu erreichen, sollte dieser in sich homogen sein Dafür wird zur Herstellung des Mischpulvers zunächst aus einer Flüssigkeit, dem Binder, der in der Flüssigkeit ganz oder zum Teil lösbar ist und den weiteren Komponenten des Mischpulvers eine Aufschlämmung gebildet, die sodann in eine andere Flüssigkeit, mit der das Lösungsmittel mischbar, in der der Binder jedoch nicht oder nur schwer löslich ist, eingegeben wird, worauf sich die mit dem Binder überzogenen Körner als schlammige Masse absetzen und durch Dekantieren von der überstehenden Flüssigkeit befreit und anschließend getrocknet werden. Als Binder kann beispielsweise Pech, Teer oder Kunstharz eingesetzt werden; der ggf. im Mischpulver enthaltene Kohlenstoff kann aus gemahlenem Koks, Elektrographit, Naturgraphit, Kohle aus Holz oder anderen Zellstoffen und/oder Ruß bestehen.

Des weiteren ist ferner von Vorteil, daß die Aufschlämmung in einer Mischkammer mittels einer Mischdüse in die Abscheideflüssigkeit eingespritzt wird, so daß die Körner mit dem Bindemittel gleichmäßig überzogen werden. Ein weiterer Vorteil dieser Verfahrensweise ist, daß die Komponenten durch Agglomeration homogen fixiert werden. Auch ist es zweckmäßig, daß der Anteil des Binders in dem verwendeten Schlamm mehr als 10 Gew% der trockenen Einwaage beträgt.

Da zudem der β-Siliciumcarbidanteil des Materials den elektrischen Widerstand des Körpers günstig beeinflußt, ist der Anteil der im Mischpulver enthaltenen Komponenten so zu bemessen, daß der Anteil des aus dem Silicium und Kohlenstoff gebildeten β-Siliciumcarbids nach der Aufheizung des Formkörpers auf eine Temperatur von 1400 - 2000°C im Körper 30 - 100 % beträgt. Denn wie sich gezeigt hat, ist der spezifische elektrische Widerstand um so geringer, je höher der Anteil an β -Siliciumcarbid im Endkörper ist.

Es stehen somit Siliciumcarbidkörper zur Verfügung, die nicht nur als Filter, sondern gleichzeitig auch als Heizelemente für Gase und Flüssigkeiten verwendbar und damit beispielsweise in der chemischen Verfahrenstechnik einsetzbar sind: So können Substrate, die nur bei hohen Temperaturen chemisch miteinander reagieren, beim Durchströmen des Filterkörpers umgesetzt werden, indem der Körper gleichzeitig auf die gewünschte Temperatur elektrisch aufgeheizt wird. Gleichzeitig können auch die für viele chemische Reaktionen benötigten Katalysatoren leicht in das Körpermaterial eingebaut werden.

Ein weiterer Anwendungsbereich ist der Einsatz von elektrisch aufheizbaren Siliciumcarbidkörpern als Dieselrußfilter. Dafür ist zweckmäßig, daß aus dem Mischpulver bzw. Granulat mit einer aus einem Korngrößenbereich von 0,2 - 2 mm erhaltenen Kornfraktion als Grünkörper ein rohrförmiger Körper geformt wird.

Derartige Dieselrußfilter zeichnen sich aufgrund der gleichmäßigen Porenverteilung im Körper durch einen Filterwirkungsgrad für Ruß von über 98 % aus. Des weiteren haben die durch das erfindungsgemäße Verfahren herstellbaren, elektrisch aufheizbaren Siliciumcarbidkörper als Dieselrußfilter den Vorteil, daß der im Filterkörper zurückgehaltene Ruß durch Aufheizen des Körpers selbst verbrannt wird. Dies hat aber auch zur Folge, daß der Körper mit der Verbrennung der zurückgdehaltenen Rußpartikel durch elektrische Aufheizung gleichzeitig vollständig und auch gleichmäßig regeneriert wird. Zudem ist diese Art der Regeneration auch schonend und kontrollierbar. Demgegenüber müssen die z.Zt. in dieselbetriebenen Motoren eingesetzten keramischen Filtersysteme zu deren periodisch durchzuführenden Regeneration durch eine zusätzliche Brennervorrichtung erhitzt werden. Dabei wird zum einen für die Unterbringung des Brenners zusätzlich Raum benötigt, zum anderem tritt während der Regeneration der Filtersysteme unkontrollierbare Verbrennungswärme auf, die zu lokalen Überhitzungen und damit zu Zerstörungen des Filterkörpers führt.

Als Dieselruß-Filterelement eignet sich vorzugsweise ein durchströmbarer Körper aus Siliciumcarbid mit einer Porosität von 35 - 75 % und einem spezifischen elektrischen Widerstand von 10⁻² bis zu < 18 Ω cm⁻¹, ggf. auch mit einem spezifischen Widerstand unterhalb 10 oder 15 Ω cm⁻¹, der über elektrische Kontakte elektrisch aufheizbar und regenerierbar ist. Auch ist zweckmäßig, daß der Körper rohrförmig gestaltet ist, wobei der Körper im Rohrquerschnitt rund, oval, quadratisch, wabenförmig u.ä. geformt sein kann. Je nach Anwendungsbereich derartiger Dieselruß-Filterelemente kann der Innendurchmesser 5 - 100 mm, die Wandstärke 0,5 - 30 mm und die Länge 50 mm - 3 m betragen. Zusätzlich ist die Wandung des Körpers an beiden Enden im Bereich der zur elektrischen Aufheizbarkeit angebrachten elektrischen Kontakte verdickt, so daß an diesen Stellen eine hohe Leitfähigkeit gegeben ist, wobei gleichzeitig ein zu starkes Erhitzen des Körpers im Bereich der angebrachten elektrischen Kontakte verhindert wird.

Die folgenden Ausführungsbeispiele 1-5 zeigen Möglichkeiten zur Herstellung poröser, durchströmbarer Formkörper aus Siliciumcarbid nach dem erfindungsgemäßen Verfahren. In den Vergleichsbeispielen 1 und 2 bzw. Ausführungsbeispiele 1 und 2 sind zusätzlich die spezifischen elektrischen Widerstände der erhaltenen Filterkörper einmal nach Dotierung von fertig silicierten Körpern und zum anderen nach Dotierung gemäß des erfindungsgemäßen Verfahrens einander gegenübergestellt.

### Vergleichsbeispiel 1

Es wurden 275 g Novolak-Harz in 1 1 Ethanol gelöst und durch Zugabe von 289 g α-SiC, 34 g Elektrographit und 402 g Si (Partikeldurchmesser der eingesetzten Füllermaterialien zwischen 0,5 µm und 50 µm) eine Aufschlämmung gemäß den Ansprüchen 2 bis 4 hergestellt, die mit Wasser verdüst wurde, wobei sich das im Wasser unlösliche Binderharz auf den Füllerpartikeln abschied. Durch Filtration wurde das so beschichtete Pulver von der Flüssigkeit abgetrennt, mit einem Taumelmischer agglomeriert und getrocknet.

Die Fraktion der Agglomerate mit einem Korndurchmesser von 0,5 - 1,0 mm wurde durch Sieben abgetrennt, bei 120°C quasi-isostatisch mit einem Preßdruck von 300 hPa zu einem rohrförmigen Körper mit einer Länge von 406 mm, einem Innendurchmesser von 36 mm und einem Außendurchmesser von 60 mm verpreßt.

Dieser Grünling wurde durch Erhitzen unter Argon auf 850°C verkokt, wobei unter Gewichtsverlust und Dimensionsänderungen des Rohres die Binderharz-phase in Kohlenstoff überführt wurde. Die Länge dieses Körpers betrug 383 mm, der Innendurchmesser 34 mm und der Außendurchmesser 57 mm.

Anschließend wurde das Rohr unter Argon in einem widerstandsbeheizten Ofen auf 1900°C aufgeheizt, wobei die Anteile an freiem Kohlenstoff und freiem Silicium zu β-Siliciumcarbid umgesetzt wurden, ohne daß das Rohr Dimensionsänderungen erfuhr. Der spezifische elektrische Widerstand dieses Rohres betrug zunächst 20 k Ω cm⁻¹ bei einem β-Siliciumcarbidanteil im Körper von 65 %.

In einem anschließenden Dotierungsschritt wurde dieses Rohr bei 1900°C 4 Std. mit N₂ und einem Druck von p = 1000 hPa behandelt. Der spezifische elektrische Widerstand betrug nunmehr 50 Ω cm⁻¹, der Gehalt an Stickstoff 0,08 Gew%.

Die Durchlässigkeit für Luft betrug bei 20°C und einer Druckdifferenz von 15 hPa 890 l/min; bezogen auf eine Filteraußenfläche von 1 dm² ergibt sich eine spezifische Luftdurchlässigkeit von 130 l/min cm². (Alle noch folgenden Angaben zur spezifischen Luftdurchlässigkeit beziehen sich auf eine Druckdifferenz von jeweils 15 hPa).

Eine weitere Behandlung mit N₂ bei 1900°C über einen Zeitraum von 20 Std. ergab einen spezifischen elektrischen Widerstand von 18 Ω cm.

### Ausführungsbeispiel 1

Ein unter den gleichen Bedingungen und aus den gleichen Ausgangsstoffen wie in Ausführungsbeispiel 1 hergestellter rohrförmiger Körper wurde ebenfalls wie in Beispiel 1 verkokt. Die Dotierung mit Stickstoff erfolgte hier jedoch gleichzeitig mit der Umsetzung zu β-Siliciumcarbid. Dazu wurde der verkokte Körper in einem widerstandbeheizten Ofen unter N₂ auf 1900°C aufgeheizt; die Haltezeit betrug bei der Temperatur ebenfalls 4 Std.

Der spezifsche elektrische Widerstand wurde nunmehr mit 0,05 Ω cm⁻¹ und der Gehalt an N₂ mit 0,3 Gew% bestimmt. Die spezifische Luftdurchlässigkeit betrug 130 l/min cm².

### Vergleichsbeispiel 2

Als Rohstoffe wurden 168 g Novolak-Harz, 641 g α-SiC und 191 g Si eingesetzt und gemäß dem Vergelichsbeispiel 1 beschichtet, geformt, verkokt und zu β-SiC umgesetzt. Der hergesetllte rohrförmige Körper hatte einen spezfischen elektrischen Widerstand von 65 k Ω cm⁻¹ und nach der Dotierung mit N₂ (4 Std. bei 1900°C) von 108 Ω cm⁻¹ bei einem β-Siliciumcarbidanteil im Körper von 30 %. Die spezifische Luftdurchlässigkeit wurde mit 130 l/min cm² bestimmt.

### Ausführungsbeispiel 2

Die im Vergleichsbeispiel 2 beschriebenen Rohstoffe wurden nach dem Ausführungsbeispiel 1 weiterverarbeitet. Der resultierende spezifische elektrische Widerstand des rohrförmigen Körpers betrug danach nur noch 0,8 Ω cm⁻¹ und die spezifische Luftdurchlässigkeit 130 l/min dm².

### Ausführungsbeispiel 3

Es wurden 461 g Novolak-Harz in 2 l Ethanol gelöst und durch Eintragen von 538 g Si eine Aufschlämmung hergestellt, die wie in Vergleichsbeispiel 1 weiterverarbeitet wurde. Aus den gewonnenen Granulaten wurde ein rohrförmiger Körper hergestellt, der verkokt und anschließend während der Silicierung auf 1900°C mit Stickstoff dotiert wurde.

Der spezifische elektrische Widerstand betrug 0,03 Ω cm⁻¹ und die spezifische Luftdurchlässigkeit 130 l/min cm².

### Ausführungsbeispiel 4

In eine Binderharzlösung aus 200 g Novolak und 1,5 l Ethanol wurden 630 g Si und 169 g Elektrographit gegeben und die Beschichtung wie oben angegeben durchgeführt.

Das Pulver wurde granuliert und, wie in Ausführungsbeispiel 3 geschildert, weiterverarbeitet.

Der spezifische elektrische Widerstand des bei der Silicierung dotierten Rohres betrug 0,03 Ω cm⁻¹. Die spezifsche Luftdurchlässigkeit wurde mit 130 l/min dm² bestimmt.

### Ausführungsbeispiel 5

Gemäß Vergleichsbeispiel 1 wurde 289 g α-SiC, 34 g Elektrographit und 402 g Si mit 275 g Novolak-Harz beschichtet. Das beschichtete Pulver wurde getrocknet und im Gegensatz zu Beispiel 1 nicht agglomeriert, sondern in Pulverform weiterverarbeitet. Dazu wurde aus einer Teilmenge dieses Pulvers durch Extrudieren ein Rohr mit einem Außendurchmesser von 12 mm, einem Innendurchmesser von 8 mm und einer Länge von 150 mm hergestellt. Dieses wurde verkokt und während der Silicierung auf 1900°C mit Stickstoff dotiert. Der spezifische elektrische Widerstand betrug 0,03 Ω cm⁻¹. Die spezifische Luftdurchlässigkeit dieses im Vergleich mit den bisherigen Beispielen dichteren Materials betrug 20 l/min dm².

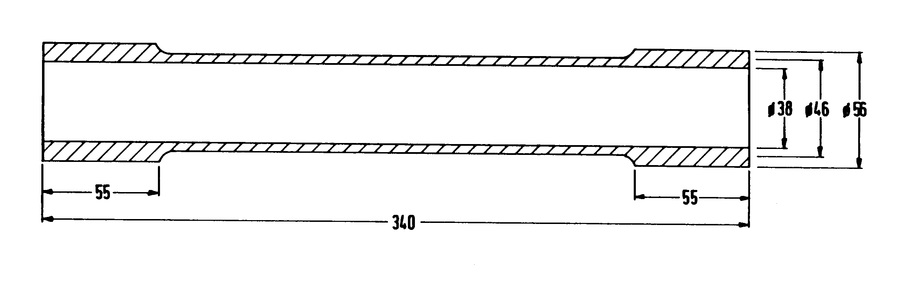

In der Figur ist des weiteren ein Beispiel eines Dieselruß-Filterelementes im Längsschnitt dargestellt. Gemäß dieser Abbildung hat der rohrförmig ausgebildete Körper eine Gesamtlänge von 340 mm mit einem Innendurchmesser von 38 mm. An den beiden Enden des Körpers ist ein Bereich von je 55 mm Länge zur Anbringung der elektrischen Kontakte vorgesehen. In diesen Bereichen beträgt die Wandstärke des Körpers 18 mm und ist damit gegenüber der restlichen Wandung mit einer Wandstärke von 8 mm um 10 mm verdickt.

## Patentansprüche

1. Verfahren zur Herstellung poröser, durchströmbarer Formkörper aus Siliciumcarbid, bei dem aus einem Mischpulver bzw. Granulat, das aus einem verkokbaren organischen Binder und Silicium oder einem verkokbaren organischen Binder und Silicum und Kohlenstoff und/oder Siliciumcarbid gebildet worden ist, mit einer Kornfraktion aus dem Korngrößenbereich von 0,2 - 10 mm ein Grünkörper geformt wird, der in einer Inertgasatmosphäre oder im Vakuum durch Aufheizen auf eine Temperatur im Bereich von 600 - 1000°C verkokt wird und der nach dem Verkokungsprozeß entstandene Formkörper auf eine Temperatur von 1400 - 2000°C aufgeheizt wird, wobei sich das Silicium mit Kohlenstoff zu β-Siliciumcarbid umsetzt,
**dadurch gekennzeichnet,**
daß Stickstoff in Form einer geeigneten Verbindung dem Mischpulver bzw. Granulat oder dem verkokten Material zugeführt wird oder die Aufheizung des Formkörpers auf eine Temperatur von 1400 - 2000°C unter Stickstoff- oder stickstoffhaltiger Atmosphäre erfolgt, so daß mit der nach dem Verkokungsprozeß folgenden Temperierung des Formkörpers auf 1400 - 2000°C und dem damit erfolgenden Silicierungsschritt unter Bildung des β-Siliciumcarbids der Formkörper gleichzeitig mit Stickstoff dotiert wird, wobei der Anteil der im Mischpulver enthaltenen Komponenten so bemessen ist, daß der Anteil des aus dem Silicium und Kohlenstoff gebildeten β-Siliciumcarbids nach der Aufheizung des Formkörpers auf eine Temperatur von 1400 - 2000°C im Körper 30 - 100 % beträgt.

## Claims

1. A process for producing porous moulded bodies of silicon carbide through which flow can occur, in which a green body is formed, with a grain fraction from the grain size range of 0.2 - 10 mm, from a mixed powder or granular material which has been formed from a coking organic binder and silicon or from a coking organic binder and silicon and carbon and/or silicon carbide, which green body is coked in an inert gas atmosphere or in vacuum by heating to a temperature in the range from 600 - 1000°C, and the moulded body which results after the coking process is heated to a temperature of 1400 - 2000°C, wherein the silicon is reacted with carbon to form β-silicon carbide.
characterised in that
nitrogen is added in the form of a suitable compound to the mixed powder or granular material or to the coked material or heating of the moulded body is effected to a temperature of 1400 - 2000°C in a nitrogen or nitrogen-containing atmosphere, so that the moulded body is doped with nitrogen simultaneously with the annealing of the moulded body at 1400 - 2000°C which follows the coking process and with the siliconisation step which occurs at the same time with the formation of β-silicon carbide, wherein the proportion of the components contained in the mixed powder is calculated so that the proportion of the β-silicon carbide formed from the silicon and carbon is 30 - 100 % in the body after heating the moulded body to a temperature of 1400 - 2000°C,

## Revendications

1. Procédé de fabrication de corps moulés poreux en carbure de silicium pouvant être traversés par un courant, selon lequel, à partir d'un mélange pulvérulent, ou de granules, qu'on a formé à partir d'un liant organique cokéfiable et de silicium ou d'un liant organique cokéfiable et de silicium et de carbone et/ou de carbure de silicium, avec une fraction de grains obtenue à partir des grains ayant une dimension de 0,2 à 10 mm, on forme un corps cru qu'on cokéfie dans une atmosphère de gaz inerte ou sous vide, par chauffage à une température comprise entre 600 et 1000°C, et le corps moulé formé après le processus de cokéfaction est chauffé à une température de 1400 à 2000°C, le silicium réagissant avec le carbone pour former du carbure de silicium β,
caractérisé en ce qu'on ajoute de l'azote, sous la forme d'un composé approprié, au mélange pulvérulent ou aux granules ou au matériau cokéfié, ou on effectue le chauffage du corps moulé, à une température de 1400 à 2000°C, dans une atmosphère d'azote ou dans une atmosphère contenant de l'azote, de sorte qu'avec l'équilibrage de la température du corps moulé à 1400-2000°C, qui suit le processus de cokéfaction, ce qui effectue donc le processus d'enrichissement en silicium avec formation du carbure de silicium β, le corps moulé est simultanément dopé avec de l'azote, la proportion des composants contenus dans le mélange pulvérulent étant dosée de telle façon que la proportion du carbure de silicium β formé à partir du silicium et du carbone soit de 30 à 100 % dans le corps après le chauffage du corps moulé à une température de 1400 à 2000°C.
